# FASCICULE DE BREVET EUROPEEN

(11) **EP 3 775 822 B1**
(45) Date de publication et mention de la délivrance du brevet: **23.02.2022**
(21) Numéro de dépôt: 19720935.6
(22) Date de dépôt: 04.04.2019
(51) Int. Cl.: G01M 3/16, G01D 5/16

(54) **PROCEDE ET DISPOSITIF DE CONTROLE D'INTEGRITE D'UNE POCHE POUR FLUIDE BIOPHARMACEUTIQUE**
VERFAHREN UND VORRICHTUNG ZUR PRÜFUNG DER INTEGRITÄT EINES BEUTELS FÜR BIOPHARMAZEUTISCHE FLÜSSIGKEIT
METHOD AND DEVICE FOR CHECKING THE INTEGRITY OF A POUCH FOR BIOPHARMACEUTICAL FLUID

(30) Priorité: 12.04.2018 FR 1870440
(43) Date de publication de la demande: 17.02.2021
(73) Titulaire: SARTORIUS STEDIM FMT SAS, 13400 Aubagne (FR)
(72) Inventeur: CAPPIA, Jean-Marc, 13420 Gemenos (FR)
(74) Mandataire: Vigand, Philippe
(86) Numéro de dépôt international: PCT/FR2019/000048
(87) Numéro de publication internationale: WO 2019/197734

(56) Documents cités:
- WO-A1-2013/103649
- JP-A- 2006 321 507
- US-A- 4 965 554
- US-A- 5 760 295

## Description

### Domaine technique

L'invention concerne un procédé de contrôle d'intégrité d'une poche pour fluide biopharmaceutique, notamment pour des poches à usage unique pour des fluides biopharmaceutiques. L'invention concerne également un dispositif de contrôle d'intégrité pour la mise en œuvre de ce procédé.

### Contexte et Art Antérieur

La présente invention est en particulier destinée à des poches stériles à usage unique pour des fluides biopharmaceutiques. Dans ce cas, on peut être amené à placer dans les poches des produits de haute valeur ajoutée, pour lesquels il est important que la poche soit intègre et donc ne présente pas de point de fuite du produit. Ces poches sont en général souples et non poreuses.

On entend ici par produit biopharmaceutique un produit issu de la biotechnologie, tels que milieux de cultures, cultures cellulaires, vaccins, solutions tampon, liquides de nutrition artificielle, ou un produit pharmaceutique ou plus généralement un produit destiné à être utilisé dans le domaine médical. Un tel produit est sous forme liquide, pâteuse, poudreuse, en une ou plusieurs phases, homogènes ou non, apte à s'écouler à travers une valve, pouvant ainsi être qualifié de fluide. L'invention peut s'appliquer également à des produits autres que biopharmaceutiques, selon la définition qui vient d'en être donnée, mais qui sont soumis à des exigences analogues en ce qui concerne leur stockage ou leur traitement. Outre le transfert d'un produit biopharmaceutique, la poche peut être adaptée pour un bioréacteur ou un fermenteur.

Il est ainsi indispensable de s'assurer que les poches soient étanches, donc que le produit contenu à l'intérieur de la poche ne puisse pas être pollué ou contaminé en aucune manière par des éléments extérieurs.

Cela s'impose d'autant plus dans le cas où la poche comporte des lignes de soudure qui peuvent constituer des sources de fuite.

Afin de contrôler l'intégrité d'une poche, on connait par exemple le procédé de contrôle du document EP223842.

Le procédé de ce document consiste à introduire du gaz stérile dans la poche et à mesurer la pression de celui-ci dans la poche. Une diminution de pression est synonyme de l'existence de fuite au niveau de la poche. Ce type de test s'effectue avant utilisation de la poche, c'est-à-dire lorsque la poche est vide de produit.

Cependant, ce type de procédé nécessite l'injection d'un gaz stérile afin de ne pas contaminer la poche. L'opération d'injection de gaz représente ainsi un risque pour la stérilité de la poche et demande l'utilisation d'un filtre à air stérilisant qui doit lui aussi être testé en intégrité. L'opération de test est donc complexe est consommatrice de temps.

Par ailleurs ce type de procédé ne permet pas de tester la poche lorsque celle-ci est remplie d'un produit biopharmaceutique.

On connait aussi la méthode dite du « challenge bactériologique » qui consiste à remplir la poche avec un milieu de culture et de plonger celle-ci toute entière dans un milieu contenant une concentration bactérienne. On vérifie ensuite que le fluide renfermé dans la poche ne contient pas de développement bactériologique ce qui traduirait un défaut d'intégrité de la poche. L'inconvénient majeur de ce test est le temps de mise en culture qu'il nécessite, 14 jours à minima, et pendant lequel le produit biopharmaceutique élaboré dans ces poches doit être stocké avant de pouvoir être libéré ou détruit s'il s'avère que la poche n'était pas intègre.

Le document US 5760295 décrit également un procédé de contrôle d'intégrité d'une poche selon l'état de la technique.

Un but de l'invention est de proposer un procédé de contrôle d'intégrité d'une poche ne présentant pas les inconvénients de l'art antérieur ainsi qu'un dispositif pour un tel procédé.

### Résumé de l'invention

A cet effet, selon un premier aspect il est proposé un procédé pour contrôler l'intégrité d'une poche (3) contenant un fluide biopharmaceutique, à l'aide d'un dispositif (7) comprenant au moins un capteur de pression (6;16), une unité de commande (5), deux plaques (1, 2) ayant des surfaces frontales entre lesquelles on vient interposer la poche à contrôler (3), et au moins un actionneur (4) configuré pour déplacer au moins une des plaques,
chaque plaque ayant une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche,
le procédé comprenant :
   **s1-** appliquer, par rapprochement des deux plaques l'une vers l'autre grâce audit actionneur, prenant ainsi en sandwich la poche à contrôler, une pression de test (Ptest) prédéterminée,
   **s2-** puis maintenir la position des plaques pendant la suite du test,
   **c-** appliquer une différence de potentiel électrique entre une électrode d'armature (10,20;17;27) et la couche frontale poreuse (11, 21), pour au moins une des plaques,
   **d-** mesurer une valeur électrique représentative d'un courant électrique (i-leak) passant au travers de la couche intermédiaire (12,22), un tel courant étant représentatif de la présence d'un liquide de fuite à l'intérieur de la couche intermédiaire,
   **e-** en déduire un état de défaut de la poche si la valeur électrique représentative d'un courant électrique dépasse un critère prédéfini (Ith).

Moyennant quoi, si du liquide contenu dans la poche vient à s'épancher à l'extérieur, il va se déplacer à l'intérieur des couches poreuses et notamment de la couche intermédiaire poreuse qui va devenir alors localement conductrice ; en conséquence de quoi, un courant électrique pourra circuler entre l'électrode d'armature et la couche frontale conductrice, révélant ainsi la présence d'un liquide à l'intérieur de la couche intermédiaire poreuse, ceci étant caractéristique de la non intégrité de la poche.

Moyennant quoi, le procédé proposé permet de tester la poche alors que celle-ci contient déjà du fluide biopharmaceutique, sans introduire de gaz ou du liquide à l'intérieur de la poche. Il n'y a ainsi pas d'invasion à l'intérieur de la poche. On ne met pas en jeu un milieu de culture bactériologique au contact de la poche ni du dispositif. De sorte que le test s'avère particulièrement simple et relativement rapide.

De plus, avantageusement, on utilise seulement le déplacement relatif des plaques pour compresser la poche par l'extérieur, aucun autre élément n'est nécessaire, notamment aucun autre élément en interaction avec la poche.

Il faut noter que le terme « poche » peut désigner ici des poches d'une capacité qui peut aller de 1 litre à 1000 litres, que ce soit des poches plates dite '2D', des poches en volume à soufflets, voire des poches dites 3D, la dimension en épaisseur étant substantiellement du même ordre de grandeur que les deux autres dimensions.

Par le terme « électrode d'armature », il faut comprendre ici soit l'armature elle-même, soit une feuille conductrice formant électrode et agencée de manière adjacente à l'armature elle-même, auquel cas une isolation électrique est réalisée entre la feuille conductrice et l'armature.

Dans divers modes de réalisation du procédé, on peut éventuellement avoir recours en outre à l'une et/ou à l'autre des dispositions suivantes, prises isolément ou en combinaison.

Selon une option, on réalise les étapes c- et **d-** sur les deux plaques (1,2), et à l'étape e-, un état de défaut de la poche si la valeur électrique représentative d'un courant électrique (i-leak) dépasse un critère prédéfini sur au moins l'une des plaques. De sorte que les deux grands côtés de la poche sont surveillés par le procédé, on maximise ainsi la probabilité de trouver un défaut éventuel de non-étanchéité.

Selon une option, la différence de potentiel électrique est formée en mode continu ou en mode pulsé à partir d'une tension stabilisée (VS), ladite valeur électrique représentative d'un courant électrique (i-leak) passant au travers de la couche intermédiaire est formée par la tension (Vm) aux bornes (C0, C1) respectives de l'électrode d'armature et de la couche frontale poreuse.

Ceci s'avère une solution requérant un dispositif électronique relativement simple et peu onéreux.

Selon une option alternative, la différence de potentiel électrique est formée en mode alternatif. Cette méthode peut être avantageusement utilisée si on veut annuler le risque d'une migration ionique liée à l'établissement d'une tension continue.

Selon une option, la pression de test (Ptest) est maintenue pendant une durée prédéfinie (TT), ladite durée prédéfinie (TT) étant comprise entre 3 minutes et 60 minutes, de préférence comprise entre 5 et 30 minutes, et de manière encore préférée comprise entre 10 et 20 minutes. La durée de test reste modérée, très inférieure à la durée du challenge bactériologique ; la durée de test peut être modulée en fonction de la criticité du produit et du niveau d'exigence du test d'intégrité.

Selon une option, la pression de test (Ptest) est comprise entre à 300 millibars et 1bar, de préférence comprise entre 400 millibars et 700 millibars. Une telle pression de test reste modérée, elle ne risque pas de faire lâcher la soudure périphérique, la pression de test peut être modulée en fonction de la criticité du produit et du niveau d'exigence du test d'intégrité ; la pression de test peut être modulée en fonction de la viscosité du produit contenu dans la poche.

Selon une option, la pression de test (Ptest) est obtenue en utilisant le capteur de pression (6;16) et en rapprochant relativement les deux plaques jusqu'à ce que la pression de test (Ptest) soit atteinte. Il s'agit d'une méthode simple et fiable pour appliquer par l'extérieur la pression souhaitée à l'intérieur de la poche, de plus on obtient ainsi une bonne indépendance vis-à-vis de la géométrie et du volume de la poche.

Selon un deuxième aspect, l'invention a pour objet un dispositif pour contrôler l'intégrité d'une poche (3) contenant un fluide biopharmaceutique, le dispositif comprenant au moins un capteur de pression (6), une unité de commande (5), deux plaques (1, 2) ayant des surfaces frontales poreuses entre lesquelles on vient interposer la poche à contrôler (3), chaque plaque ayant une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche, et au moins un actionneur (4) configuré pour déplacer au moins une des plaques, le dispositif étant configuré pour mettre en œuvre le procédé tel que décrit précédemment.

Dans divers modes de réalisation du dispositif, on peut éventuellement avoir recours en outre à l'une et/ou à l'autre des dispositions suivantes, prises isolément ou en combinaison.

Selon une option, au moins une des plaques est montée mobile en translation, sur un système de glissière. Ainsi, on exerce une action mécanique bien à plat sur les faces principales de la poche, sans risquer une déformation parasite.

Selon une option, il est prévu une première plaque (1) à position fixe, et une deuxième plaque (2) montée de façon mobile, de préférence au-dessus de la première plaque. Ceci constitue un montage mécanique simple et fiable.

Selon une option, les plaques montées à rotation l'une par rapport à l'autre. Ce type de montage mécanique est particulièrement simple et peu onéreux à mettre en œuvre.

Selon une option, la couche intermédiaire poreuse (12,22) des plaques est formée en matière non tissée, choisi parmi les polypropylènes ou les polyéthylènes, ou autres matériaux polymères similaires ou combinaison hybride de polypropylène et polyéthylène. Ces matériaux s'avèrent disponibles et bon marché. Leur porosité permet de laisser passer les fluides dans la gamme de viscosité principalement visée.

Selon une option, on peut choisir un matériau de type polyéthylène haute densité.

Selon une option, la couche intermédiaire poreuse (12,22) présente une épaisseur comprise entre 1mm et 3mm, et des pores de dimensions comprises entre 20 microns et 500 microns. Une telle épaisseur s'avère suffisante et correspond à des gammes d'épaisseur disponible dans la pratique. Le diamètre des pores permet de laisser passer les fluides dans la gamme de viscosité principalement visée.

Selon une option, il est prévu que la couche frontale poreuse comprenne un treillis de conduction électrique formant électrode reliée à une première borne (C1). Autrement dit, la couche frontale est formée par, ou au moins comporte, une nappe de maillage formant une électrode répartie sur toute la surface de la plaque, ce qui permet de détecter de façon fiable une fuite même minime et bien localisée.

Selon une option, la couche frontale poreuse présente une épaisseur comprise entre 1mm et 3mm, et le treillis de conduction a une maille comprise entre 20 microns et 50 microns, ou comprise entre 50 microns et 150 microns, ou comprise entre 150 microns et 500 microns. Une telle épaisseur s'avère suffisante et correspond à des gammes d'épaisseur disponible dans la pratique. Le diamètre de la maille permet de laisser passer les fluides dans la gamme de viscosité principalement visée et de former un bon collecteur électrique.

Selon une option il est prévu une feuille conductrice (17,27) formant ladite électrode d'armature, agencée de manière adjacente à l'armature et couplée à une deuxième borne (C0). Moyennant quoi on peut collecter de façon fiable le courant de fuite sur toute la surface utile de la plaque et si du liquide, même très localisé, arrive dans la couche intermédiaire poreuse, un courant pourra circuler entre la feuille conductrice (17,27) formant électrode d'armature et la couche frontale, révélant ainsi la fuite.

Selon une option de variante, l'armature (10,20) de plaque est réalisée en métal, bon conducteur électrique, l'armature elle-même formant alors électrode d'armature couplée à une deuxième borne (C0). Moyennant quoi l'armature forme un très bon conducteur électrique sur toute la surface de la plaque et si du liquide, même très localisé, arrive dans la couche intermédiaire poreuse, un courant pourra circuler entre l'armature et la couche frontale, révélant ainsi la fuite.

Selon une option, les surfaces frontales des plaques sont agencées soit substantiellement horizontalement, soit substantiellement verticalement. On peut choisir l'une ou l'autre des configurations selon les principes de manutention retenus et le volume des poches considérées. Il n'est pas exclu pour autant d'avoir une autre orientation par exemple inclinée.

Selon une option, l'actionneur (4) de mise en pression des plaques est formé comme un vérin pneumatique ou comme un vérin électrique. Ce type d'actionneur permet avantageusement d'appliquer une pression mécanique de façon fiable et bien contrôlée ; de plus il n'y a pas de fluide autre que l'air, par conséquent ce type d'actionneur reste propre et n'est pas polluant.

### Description des figures

D'autres caractéristiques et avantages de l'invention apparaîtront au cours de la description suivante donnée à titre d'exemple non limitatif, en regard des dessins joints, sur lesquels :
- les figures 1A, 1B, 1C représentent une poche destinée à subir un contrôle d'intégrité, la poche contenant un produit biopharmaceutique, respectivement en vue de face, en vue de profil et en vue de dessus,
- la figure 2 représente schématiquement un dispositif selon la présente invention avec deux plaques de mise en pression et la poche de la figure 1, avant le début du test d'intégrité, selon un mode de réalisation de la présente invention,
- la figure 3 est analogue à la figure 2, et représente schématiquement le dispositif pendant la mise en oeuvre du test,
- la figure 4 représente un diagramme fonctionnel du dispositif avec son unité de commande,
- la figure 5 illustre un diagramme de temps avec des pressions mises en œuvre pendant la séquence de test d'intégrité,
- la figure 6 représente un diagramme de circuit électrique du dispositif,
- la figure 7 illustre un diagramme de temps avec des tensions et courant mises en œuvre pendant la séquence de test d'intégrité.

### Description détaillée

Sur les différentes figures, les mêmes références désignent des éléments identiques ou similaires. Pour des raisons de clarté de l'exposé, certaines éléments ne sont pas nécessairement représentés à l'échelle, notamment concernant les épaisseurs de couches poreuses qui ont été exagérées à dessein.

Le dispositif de contrôle 7 présenté aux figures permet de contrôler l'intégrité d'une poche à contrôler **3** contenant un produit biopharmaceutique F. La poche **3** peut contenir par exemple de 1 litre jusqu'à de 1000 litres de fluide biopharmaceutique F.

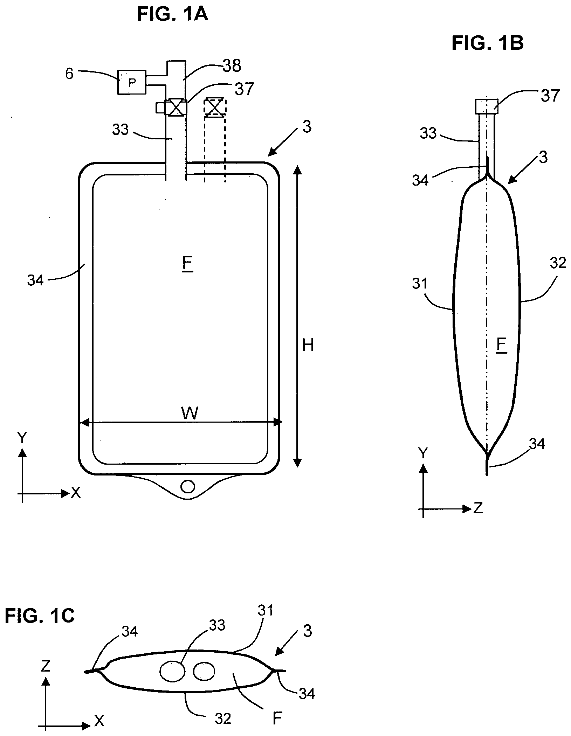

Dans l'exemple illustré aux figures, il s'agit d'une poche dite '2D' formée principalement par deux parois **31,32** agencées en regard l'une de l'autre. Les parois **31,32** sont soudées entre elles sur la bordure périphérique **34** de sorte à fermer la poche de façon étanche. Il est prévu un ou plusieurs ports **33** raccordés de façon étanche à la poche pour emplir et/ou vider le contenu de la poche. Une telle poche dite '*2D*' présente une épaisseur substantiellement inférieure aux deux autres dimensions largeur et hauteur de la poche. Dans l'exemple qui peut telle qu'illustrée, la hauteur **H** (selon l'axe Y en Fig 1A) de la poche peut aller de 10 cm à 150 cm, la largeur **W** (selon l'axe X en Fig 1A) de la poche peut aller de 5 cm à 50 cm. L'épaisseur selon la troisième dimension repérée ici Z peut aller de 1 cm à 25 cm.

L'invention peut également être appliquée à des poches 2D avec soufflet dans lesquelles l'épaisseur relative peut être substantiellement plus importante, comme par exemple enseignée dans le document EP223842.

On note aussi qu'il n'est pas exclu d'appliquer la présente invention à des poches dites pour lesquelles '3D' la dimension en épaisseur est substantiellement du même ordre de grandeur que les deux autres dimensions.

Le dispositif de contrôle **7** comprend deux plaques : une première plaque **1** et une seconde plaque **2.** Les première et seconde plaques **1,2** sont destinées à venir en contact avec la poche 3 à contrôler.

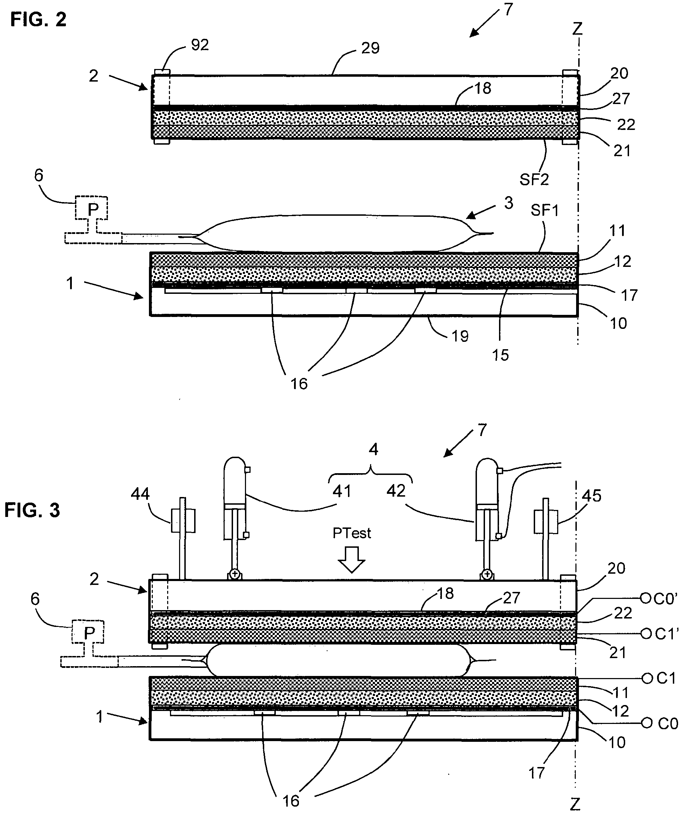

Plus précisément, comme illustré aux figures 2 et 3, la poche 3 est interposée entre les deux plaques **1,2** et les plaques **1,2,** par leur déplacement relatif, viennent prendre appui sur la poche 3 et pressurent alors la poche 3. En d'autres termes, les plaques vont pressurer la poche 3 pour appliquer une pression sur la poche 3 par l'extérieur. La pressurisation de la poche 3, remplie du fluide biopharmaceutique, se fait ainsi par l'extérieur de la poche 3 sans invasion intérieure de gaz ou de liquide.

La poche comprend à l'extrémité libre du port **33** un robinet d'arrêt **37** sur lequel peut être raccordé un moyen de mesure de la pression, typiquement un capteur de pression 6. Dans l'exemple illustré, le capteur de pression est agencé sur un manchon en T raccordé sur le robinet d'arrêt **37.**

### Plaques avec couches poreuses et électrodes

Chacune des plaques **1,2,** est épaisse et solide, elle forme une structure pas ou très peu déformable.

La plaque inférieure (ici première plaque **1)** comprend une armature **10** conférant une robustesse structurelle à la plaque **1.** L'armature est fabriquée en métal, par exemple acier inoxydable, aluminium, ou tout autre alliage non sujet à la corrosion. Ses dimensions en longueur et largeur, peuvent aller de 30 cm à 2 m, son épaisseur peut aller de 5 cm à 25 cm. La forme générale de l'armature est parallélépipédique.

L'armature comprend une face dorsale **19** qui dans l'exemple illustré va venir s'appuyer sur un bâti de laboratoire ou est monté sur châssis. La face opposée de l'armature n'est pas destinée à venir en contact directement avec la poche. En effet, il est prévu une surface frontale poreuse **SF1.**

La couche frontale poreuse **11** présente de préférence une épaisseur homogène et recouvre substantiellement toute la surface de la première de manière à pouvoir traiter des poches différentes dimensions.

La couche frontale poreuse **11** présente de préférence une épaisseur comprise entre 1mm et 3mm.

La couche frontale poreuse comporte des pores de dimensions comprises entre 10 microns et 200 microns, selon une disposition de répétition géométrique du même ordre de grandeur, en surface et dans le volume. Ainsi, des liquides allant de l'eau quasi pure jusqu'à une solution de viscosité 10 milli-Poiseuille voire de viscosité 50 milli-Poiseuille peuvent traverser la couche poreuse. En somme, la couche frontale poreuse 11 permet de laisser s'infiltrer une gamme de liquide avec des viscosités allant de 0,5 milli-Poiseuille à 100 milli-Poiseuille. De la sorte, on ne risque pas une occultation d'une fuite, même très petite et très localisée, de par le contact surfacique entre les plaques de mise en pression et la poche elle-même. Autrement dit la présence du matériau pour eux au contact de la poche évite de former un bouchon qui occulterait une fuite potentielle

Il est prévu optionnellement entre l'armature **10** et la couche frontale **11** un intervalle **15** dans lequel sont disposés un ou plusieurs capteurs de pression **16.**

En pratique, il peut s'agir d'une plaquette piézo-électrique, ou une plaquette de type jauge de contraintes. Plusieurs capteurs de pression peuvent être disposés sur la surface utilisée ; il peut être prévu en outre des entretoises élastiques pour le maintien homogène de la couche frontale sur l'armature **10.** Des capteurs de pression intégrée à l'intérieur de la plaque fournissent une image fidèle de la pression appliquée sur la poche.

Il est prévu une électrode d'armature, qui forme une couche conductrice de référence, cette électrode d'armature peut être formée soit par l'armature elle-même soit par une feuille conductrice formant électrode et agencée de manière adjacente à l'armature, auquel cas une isolation électrique est réalisée entre la feuille conductrice et l'armature.

L'armature **10** de la première plaque **1** forme, selon la première option, un conducteur électrique assimilable à une électrode et est connectée à une borne de raccordement électrique **C0.**

Selon la seconde option (représentée aux figures), il est prévu optionnellement entre une feuille conductrice **17** formant électrode adjacente à l'armature et destinée à être couplée à la borne électrique notée C0. Ladite feuille conductrice 17 peut se présenter par exemple sous la forme d'un feuillet d'aluminium, par exemple d'épaisseur 2 à 3mm. Mais toute autre couche conductrice pourrait convenir également, avec une couche isolante entre l'armature elle-même et cette couche conductrice.

La couche frontale poreuse **11** comprend un treillis de conduction électrique formant électrode reliée à la borne de raccordement notée **C1**.

Le treillis de conduction se présente comme un réseau maillé ou encore un filet ou une grille fine, réalisé en fils métalliques non sujets à la corrosion, par exemple de l'acier inoxydable, un alliage d'aluminium, du zinc, etc...

Le pas de maillage (la période de répétition géométrique) est compris entre 20 microns et 50 microns. Selon une option, le pas de maillage peut être compris entre 50 microns et 150 microns. Selon une option, pas de maillage peut être le compris entre 150 microns et 500 microns.

La couche frontale poreuse **11** peut être formée uniquement par le treillis conduction. Toutefois dans une variante, le treillis de conduction peut être associé à un substrat poreux à base de polypropylène et/ou polyéthylène avec des pores de dimensions comprises entre 10 microns et 200 microns.

La première plaque comprend en outre une couche intermédiaire poreuse **12** interposée entre la couche frontale **11** et l'armature 10.

La porosité de ces matériaux permet de laisser passer les fluides dans la gamme de viscosité principalement visée. On peut choisir par exemple un produit de la gamme Novatexx de la société Freudenberg Filtration^{™} ou un produit de la gamme XS de la société Porex^{™}. Selon une autre réalisation la couche frontale est formée d'un composé d'acétate d'éthyl-vinyle, ou de polyéthylène haute densité.

La couche intermédiaire poreuse **12** présente une épaisseur comprise entre 1mm et 3mm, et des pores de dimensions comprises entre 20 microns et 500 microns.

La couche intermédiaire est électriquement non conductrice lorsqu'elle est sèche. Mais lorsque du liquide arrive dans la couche intermédiaire 12, celle-ci devient conductrice au moins à l'endroit où le liquide est présent, du fait de la présence dans les pores et de manière continue entre les pores d'un liquide provenant de la solution biopharmaceutique F qui s'est échappé de la poche. La solution biopharmaceutique en question contient des ions et présente une bonne conductance électrique.

Concernant la deuxième plaque **2,** sa constitution est identique ou similaire à la première, de façon symétrique par rapport au plan XY, avec armature 20, couche frontale 21 et couche intermédiaire 22.

L'armature **20** conférant une robustesse structurelle à la plaque 2. Comme la première, l'armature est fabriquée en métal, par exemple acier inoxydable, aluminium, ou tout autre alliage non sujet à la corrosion.

L'armature comprend une face dorsale **29** qui dans l'exemple illustré va venir recevoir au moins un actionneur de mise en pression qui sera détaillé plus loin

La face inférieure **18** de l'armature n'est pas destinée à venir en contact directement avec la poche. En effet, il est prévu une surface frontale poreuse **SF2.** Comme exposé précédemment, cette surface frontale est formée par une couche frontale poreuse repérée 21, analogue à la couche frontale décrite pour la première plaque.

De même, la couche frontale poreuse **21** présente de préférence une épaisseur homogène et recouvre toute la surface de la première de manière à pouvoir traiter des poches différentes dimensions. La couche frontale poreuse **21** présente une épaisseur comprise entre 1mm et 3mm, et des pores de dimensions comprises entre 10 microns et 200 microns.

Il faut remarquer que la deuxième plaque peut être également équipée dans un intervalle entre l'armature et la couche frontale de capteurs de pression (non représentés aux figures). La forme générale de l'armature est parallélépipédique, toutefois la partie centrale peut être plus épaisse que les zones de bordure.

La couche frontale poreuse **21** est identique ou similaire à la couche frontale poreuse 11 de la première plaque. Notamment, la couche frontale poreuse 21 comprend un treillis de conduction électrique formant électrode reliée à la borne de raccordement notée **C1'**.

La couche intermédiaire poreuse **22** est identique ou similaire à la couche intermédiaire poreuse **12** de la première plaque.

Pour l'électrode d'armature, les deux solutions évoquées plus haut sont également disponibles ici.

Selon une première option, l'armature **20** de la deuxième plaque **2** forme un conducteur électrique assimilable à une électrode (armature d'électrode) et est connectée à une borne de raccordement **C0'**.

Selon la deuxième option (représentée aux figures), il est prévu optionnellement une feuille conductrice 27 formant électrode adjacente à l'armature et destinée à être couplée à la borne électrique notée C0'. Ladite feuille conductrice 27 peut se présenter par exemple sous la forme d'un feuillet d'aluminium, par exemple d'épaisseur 2 à 3mm. Mais toute autre couche conductrice pourrait convenir également, avec une couche isolante entre l'armature elle-même et cette couche conductrice.

Dans un exemple, la deuxième plaque **2** est montée à translation le long de l'axe **Z,** par rapport à la première plaque qui est fixe. Le montage à translation peut faire appel à un système de glissières connues en soi donc non décrit en détail ici. En outre, il peut être prévu sur le système de glissières un ou plusieurs freins **44,45** qui peuvent sélectivement immobiliser la position courante de la deuxième plaque.

En outre, il est prévu au moins un actionneur **4** de mise en pression des plaques l'une vers l'autre. Dans l'exemple illustré, on a représenté deux vérins pneumatiques **41,42** qui forment les actionneurs pour pousser vers le bas la deuxième plaque 2 afin de pressuriser la poche.

En variante, il est possible d'utiliser comme actionneur(s) des vérins électriques ou des systèmes de type pignon-crémaillère à moteur électrique. Il est également possible d'utiliser un système de came excentrique commandée par moto réducteur. La came excentrique pousse le dos de l'armature mobile ; dans un tel système on peut avantageusement se dispenser d'un frein pour maintenir la position.

Il peut être prévu un système de rappel à ressort, agissant à l'encontre de l'action des vérins, ou bien des vérins à double effet, ceci afin de de remonter la deuxième plaque à la fin du test d'intégrité.

S'agissant du maintien de la couche frontale sur l'armature, plusieurs solutions peuvent être envisagées. Une solution consiste à prévoir des liens physiques comme représenté aux figures à la référence **92,** de manière à maintenir la cohésion entre l'armature et la couche frontale, de préférence sur les zones périphériques de la couche frontale. Une autre solution fait appel à un système à dépression ; ou à un système de ventouses.

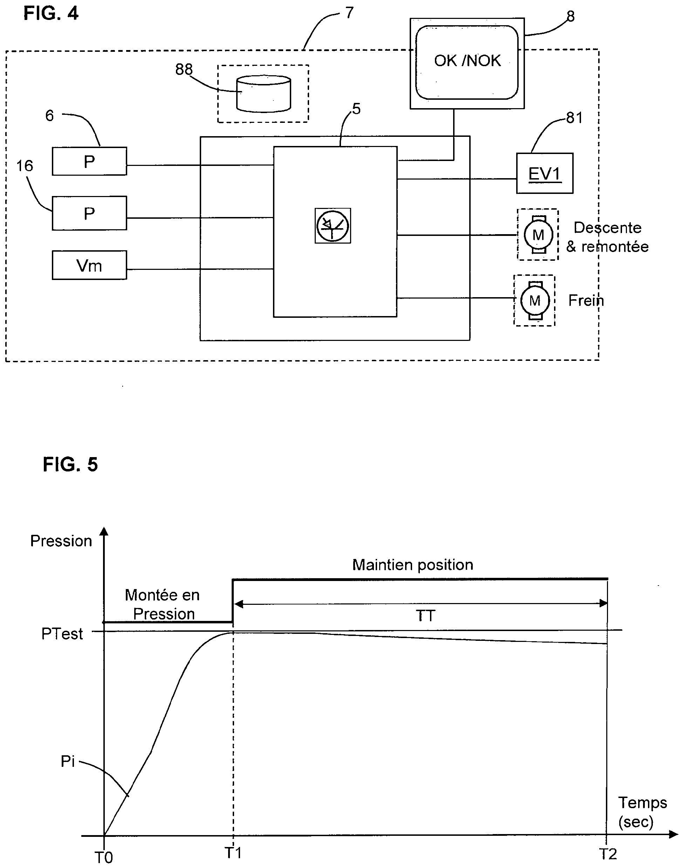

Selon l'exemple illustré aux figures, la première plaque **1** est fixe, et la deuxième plaque 2 est montée mobile, en translation le long de l'axe **Z** entre une position éloignée (figures 2 et 4) et une position de mise en compression (figures 3 et 5). La course d'éloignement peut typiquement être de l'ordre de 50 cm voire 1 m.

Il peut être prévu une cinématique mixte avec une approche grossière pour la course de rapprochement général et l'intervention de l'actionneur décrit plus haut pour le système de mise en pression concernant la course finale qui doit être finement contrôlée.

Dans une variante non représentée, les deux plaques pourraient être mobiles, l'une par rapport à l'autre, et le cas échéant aussi par rapport à un bâti.

Dans une variante non représentée, les plaques peuvent être montées à rotation l'une par rapport à l'autre. Dans ce cas, il peut être prévu une ouverture à environ 90° pour la position éloignée.

### Mise en pression

La pression utilisée pour le contrôle d'intégrité de la poche 3, est appelée ici pression de test notée **Ptest**. La pression de test **Ptest** est une pression prédéfinie comprise entre 20 millibars et 1000 millibars selon l'application visée. Par exemple, la pression de test **Ptest** est une pression relative comprise entre 300 millibars et 500 millibars, dans beaucoup de cas pratiques. Par exemple, pour certains types de liquide la pression de test **Ptest** est comprise entre 400 millibars et 700 millibars.

Par exemples illustrés aux figures il est prévu un capteur de pression **6** agencé sur un port **33** de la poche, lequel permet de mesurer directement la pression qui règne à l'intérieur de la poche.

Optionnellement, on retranche de la pression mesurée par le capteur de pression de pression **6,** la valeur de pression atmosphérique locale mesurée par ailleurs afin de compenser une éventuelle variation de la pression atmosphérique locale qui pourrait subvenir pendant la durée du test.

Comme illustré à la figure 5, le procédé propose d'appliquer un effort mécanique extérieur sur la poche pour faire monter la pression à l'intérieur de la poche jusqu'à la pression de test **Ptest** ; puis de maintenir la configuration sans changement, et notamment sans mouvement de la deuxième plaque, cependant que l'on examine l'évolution de la pression au cours du temps.

L'évolution de la pression au cours du temps peut être obtenue par un des capteurs de pression déjà mentionnée à savoir un capteur dit 'direct' en relation fluidique directe avec la poche, ou bien avec un capteur de mesure indirecte agencée à l'intérieur de la première plaque (et/ou de la deuxième plaque).

La pression de test **Ptest** est obtenue en utilisant l'un ou l'autre des capteurs de pression **6,16** et en rapprochant relativement les deux plaques jusqu'à ce que la pression de test **Ptest** soit atteinte.

La mise en pression est obtenue par déplacement d'au moins une plaque au moyen de la commande d'un actionneur 4.

La phase de mise en pression entre l'instant **T0** et l'instant **T1** peut être courte voire très courte c'est-à-dire de l'ordre de quelques secondes.

A l'inverse, la durée de surveillance de l'évolution de pression est relativement plus longue à savoir entre les instants **T1** et **T2** ce qui représente une durée notée **TT,** généralement de plusieurs minutes à plusieurs dizaines de minutes.

La durée prédéfinie **TT** peut être comprise entre 3 minutes et 60 minutes, de préférence comprise entre 5 et 30 minutes, et de manière encore préférée comprise entre 10 et 20 minutes.

### Test électrique

Selon l'invention, il est prévu de pouvoir détecter une fuite de liquide par un test de nature électrique.

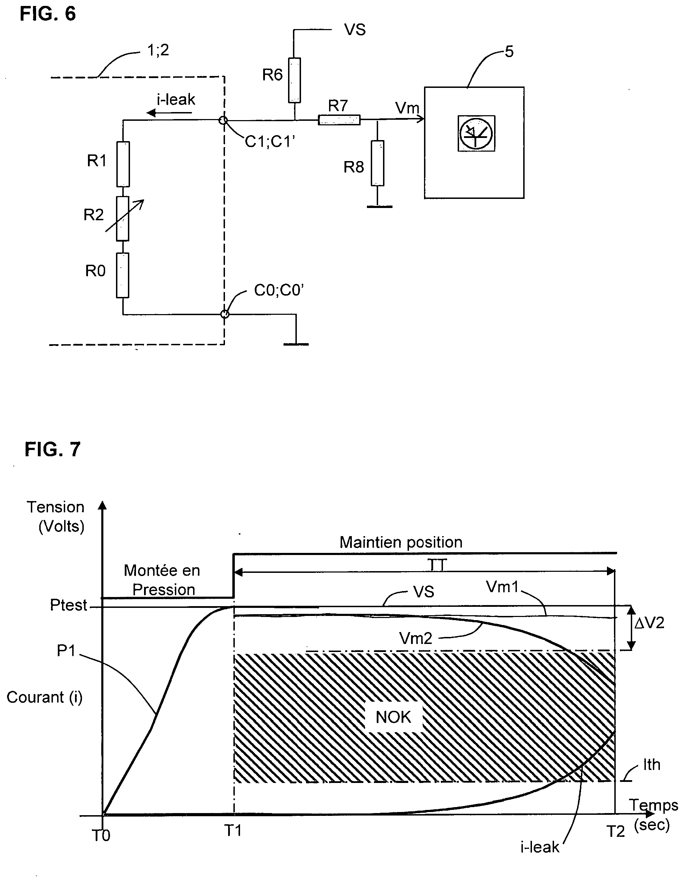

Comme illustré à la figure 6, les constituants d'une plaque (1, resp 2) forment une résistance électrique entre les bornes **C0** (respectivement C0') et C1 (respectivement C1'), en l'occurrence on trouve en série : la résistance de l'armature elle-même notée **R0,** la résistance de la couche intermédiaire notée **R2** et la résistance de la couche frontale notée **R1**.

Les résistances **R0** et **R1** sont des valeurs faibles et stables, elles n'évoluent pas au cours de la séquence de test. À l'inverse, la valeur de la résistance **R2** dépend au premier ordre de la présence de liquide à l'intérieur de la couche intermédiaire. On peut considérer que **R2** et quasiment infini lorsque la couche intermédiaire poreuse est sèche (conductance nulle) ; dès que du liquide est présent dans la couche intermédiaire, la conductance devient non nulle et la résistance diminue de manière très prononcée.

Selon un exemple de montage électrique, on polarise la borne **C1** avec une tension de polarisation issue d'une station stabilisée **VS** protégée par une résistance de pull-up **R6.**

L'unité de commande **5** relit la tension de **C1** au travers d'un pont diviseur, **Vm** est l'attention de lecture.

Le courant **i-leak** circule en fonction de la valeur de la résistance **R2.**

**i-leak** = 0 si la couche intermédiaire poreuse est sèche. Si la valeur de la résistance **R2** (liquide dans la couche intermédiaire) alors **i-leak** augmente et **Vm** baisse.

Un cas de fuite est représenté sur le chronogramme à la figure 7. **Vm2** représentent la tension mesurée à l'entrée de l'unité de commande dans le cas d'une fuite.

Selon une option, la différence de potentiel électrique est formée, non plus en mode continu comme décrit ci-dessus, mais en mode pulsé à partir de la tension stabilisée **VS.** Un switch électronique commandé (transistor MOS ou FET) est alors ajoutée entre la borne **C1** et la tension stabilisée **VS.** Ainsi, la mesure est faite à des moments particuliers seulement (quand le switch est actif) et la plaque n'est plus polarisée aux autres moments.

Selon une autre option, la différence de potentiel électrique est appliquée en mode alternatif. Il faut remarquer que la polarisation positive pourrait être raccordée à la deuxième borne C0, avec la première borne C1 raccordé à la masse (référence des tensions).

Comme illustré à la figure 4, le dispositif de contrôle d'intégrité 7 comprend en outre de préférence un écran de visualisation **8** reliée à l'unité de commande 5.

L'écran de visualisation **8** permet de donner un résultat visuellement pour l'utilisateur du dispositif.

L'unité de commande 5 pilote un organe de commande reliée à l'actionneur de rapprochement de la plaque supérieure. Cet organe de commande peut être une électrovanne automatique noté **81,** un moteur électrique (cas du vérin électrique, de la came excentrique, ou de la solution pignon crémaillère). Par ailleurs, l'unité de commande 5 commande un organe commande pour le frein qui maintient la position sécurisée.

Le paramétrage des critères d'acceptation ou de rejet (notamment le seuil **Ith)** est contenu dans une base de données **88.** Ceci permet de rendre spécifiques les critères en fonction du type de poche à contrôler, du type et de liquide qui a été utilisé à l'intérieur de la poche et du niveau d'exigence du contrôle d'intégrité.

### Divers autres points

L'unité de commande 5 peut être avantageusement logée dans une armoire d'équipement **9.**

S'agissant de l'agencement général, dans l'exemple illustré, les surfaces frontales des plaques sont agencées substantiellement horizontalement, toutefois pourrait aussi être agencé de manière substantiellement verticale, la poche pouvant être alors suspendue avant d'être compressée.

Il peut être prévu d'utiliser en plus de la méthode de baisse de pression et de la méthode électrique une méthode de détection par colorimétrie. À cet effet, on ajoute soit sur la face frontale soit derrière la face frontale de chaque plaque une feuille colorimétrique. On utilise par exemple cet effet un papier revêtu de chlorophénol qui présente la propriété de changer de couleur lorsqu'il est mis en contact avec de l'eau ou un solvant aqueux.

## Revendications

1. **Procédé** pour contrôler l'intégrité d'une poche (3) contenant un fluide biopharmaceutique, à l'aide d'un dispositif (7) comprenant au moins un capteur de pression (6;16), une unité de commande (5), deux plaques (1, 2) ayant des surfaces frontales entre lesquelles on vient interposer la poche à contrôler (3), et au moins un actionneur (4) configuré pour déplacer au moins une des plaques,
chaque plaque ayant une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche,
le procédé comprenant :
**s1-** appliquer, par rapprochement des deux plaques l'une vers l'autre grâce audit actionneur (4), prenant ainsi en sandwich la poche à contrôler, une pression de test (Ptest) prédéterminée,
**s2-** puis maintenir la position des plaques pendant la suite du test,
**c-** appliquer une différence de potentiel électrique entre une électrode d'armature (10,20;17;27) et la couche frontale poreuse (11, 21),
**d-** mesurer une valeur électrique représentative d'un courant électrique (i-leak) passant au travers de la couche intermédiaire (12,22), un tel courant étant représentatif de la présence d'un liquide de fuite à l'intérieur de la couche intermédiaire,
**e-** en déduire un état de défaut de la poche si la valeur électrique représentative d'un courant électrique dépasse un critère prédéfini (Ith).

2. Procédé selon la revendication 1, dans lequel on réalise les étapes c- et d- sur les deux plaques (1,2), et à l'étape e-, un état de défaut de la poche si la valeur électrique représentative d'un courant électrique (i-leak) dépasse un critère prédéfini sur au moins l'une des plaques.

3. Procédé selon l'une des revendications 1 à 2, dans lequel la différence de potentiel électrique est formée en mode continu ou en mode pulsé à partir d'une tension stabilisée (VS), ladite valeur électrique représentative d'un courant électrique (i-leak) passant au travers de la couche intermédiaire est formée par la tension (Vm) aux bornes (C0, C1) respectives de l'électrode d'armature et de la couche frontale poreuse.

4. Procédé selon l'une des revendications 1 à 3, dans lequel la pression de test (Ptest) est maintenue pendant une durée prédéfinie (TT), ladite durée prédéfinie (TT) étant comprise entre 3 minutes et 60 minutes, de préférence comprise entre 5 et 30 minutes, et de manière encore préférée comprise entre 10 et 20 minutes.

5. Procédé selon l'une des revendications 1 à 4, dans lequel la pression de test (Ptest) est comprise entre à 300 millibars et 1bar, de préférence comprise entre 400 millibars et 700 millibars.

6. Procédé selon l'une des revendications 1 à 5, dans lequel la pression de test (Ptest) est obtenue en utilisant le capteur de pression (6;16) et en rapprochant les deux plaques jusqu'à ce que la pression de test (Ptest) soit atteinte.

7. **Dispositif** (7) pour contrôler l'intégrité d'une poche à contrôler (3) contenant un fluide biopharmaceutique, comprenant au moins un capteur de pression (6;16), une unité de commande (5), deux plaques (1, 2) ayant des surfaces frontales poreuses entre lesquelles on vient interposer la poche à contrôler (3), chaque plaque ayant une armature (10,20), une couche frontale poreuse (11,21) électriquement conductrice et une couche intermédiaire poreuse (12,22) interposée entre la couche frontale poreuse et l'armature, la couche intermédiaire étant électriquement non conductrice lorsqu'elle est sèche, et au moins un actionneur (4) configuré pour déplacer au moins une des plaques, le dispositif étant configuré pour mettre en œuvre le procédé selon la revendication 1.

8. Dispositif selon la revendication 7, dans lequel les plaques montées à translation, sur un système de glissière.

9. Dispositif selon l'une des revendications 7 à 8, dans lequel il est prévu une première plaque (1) à position fixe, et une deuxième plaque (2) montée de façon mobile, de préférence au-dessus de la première plaque.

10. Dispositif selon l'une des revendications 7 à 8, dans lequel la couche intermédiaire poreuse (12,22) des plaques est formée en matière non tissée, choisi parmi les polypropylènes ou les polyéthylènes, ou autres matériaux polymères similaires.

11. Dispositif selon l'une des revendications 7 à 9, dans lequel la couche intermédiaire poreuse (12,22) présente une épaisseur comprise entre 1mm et 3mm, et des pores de dimensions comprises entre 20 microns et 500 microns.

12. Dispositif selon l'une des revendications 7 à 10, dans lequel la couche frontale poreuse comprend un treillis de conduction électrique formant électrode reliée à une première borne (C1).

13. Dispositif selon l'une des revendications 7 à 11, dans lequel la couche frontale poreuse présente une épaisseur comprise entre 1mm et 3mm, et le treillis de conduction a une maille comprise entre 20 microns et 50 microns, ou comprise entre 50 microns et 150 microns, ou comprise entre 150 microns et 500 microns.

14. Dispositif selon l'une des revendications 7 à 12, dans lequel il est prévu une feuille conductrice (17,27) formant ladite électrode d'armature, agencée de manière adjacente à l'armature et couplée à une deuxième borne (C0).

15. Dispositif selon l'une des revendications 7 à 13, dans lequel l'actionneur (4) de mise en pression des plaques est formé comme un vérin pneumatique ou comme un vérin électrique.

## Patentansprüche

1. Verfahren zur Prüfung der Integrität eines Beutels (3), der eine biopharmazeutische Flüssigkeit enthält, mittels einer Vorrichtung (7), die mindestens einen Drucksensor (6; 16), eine Steuereinheit (5), zwei Platten (1, 2), die vordere Oberflächen aufweisen, zwischen denen der zu prüfende Beutel (3) eingesetzt wird, und mindestens einen Aktuator (4) umfasst, der dazu ausgestaltet ist, mindestens eine der Platten zu verlagern,
wobei jede Platte eine Armierung (10, 20), eine poröse Vorderschicht (11, 21), die elektrisch leitfähig ist, und eine poröse Zwischenschicht (12, 22) aufweist, die zwischen der porösen Vorderschicht und der Armierung eingesetzt ist, wobei die Zwischenschicht nicht elektrisch leitfähig ist, wenn sie trocken ist,
wobei das Verfahren umfasst:
s1- Anwenden eines vorbestimmten Testdrucks (Ptest) durch Annäherung der zwei Platten aneinander mittels des Aktuators (4), wodurch der zu prüfende Beutel in die Zange genommen wird,
s2- dann Bewahren der Position der Platten während der Folge des Tests,
c- Anlegen einer elektrischen Potentialdifferenz zwischen einer Armierungselektrode (10, 20; 17, 27) und der porösen Vorderschicht (11, 21),
d- Messen eines elektrischen Werts, der für einen elektrischen Strom (i-leak) repräsentativ ist, der die Zwischenschicht (12, 22) durchquert, wobei ein solcher Strom für das Vorhandensein einer Leckageflüssigkeit im Inneren der Zwischenschicht charakteristisch ist,
e - davon Ableiten eines Defekts an dem Beutel, wenn der elektrische Wert, der für einen elektrischen Strom repräsentativ ist, ein vordefiniertes Kriterium (Ith) überschreitet.

2. Verfahren nach Anspruch 1, wobei die Schritte c- und d- auf den zwei Platten (1, 2) ausgeführt werden, und im Schritt e- ein defekter Zustand des Beutels festgestellt wird, wenn der elektrische Wert, der für einen elektrischen Strom (i-leak) repräsentativ ist, ein vordefiniertes Kriterium auf mindestens einer der Platten überschreitet.

3. Verfahren nach einem der Ansprüche 1 bis 2, wobei die elektrische Potentialdifferenz fortlaufend oder pulsierend ausgehend von einer stabilisierten Spannung (VS) gebildet wird, wobei der elektrische Wert, der für einen elektrischen Strom (i-leak) repräsentativ ist, der die Zwischenschicht durchquert, durch die Spannung (Vm) an den jeweiligen Anschlüssen (C0, C1) der Armierungselektrode und der porösen Vorderschicht gebildet wird.

4. Verfahren nach einem der Ansprüche 1 bis 3, wobei der Testdruck (Ptest) während einer vordefinierten Dauer (TT) aufrechterhalten wird, wobei die vordefinierte Dauer (TT) zwischen 3 Minuten und 60 Minuten beträgt, vorzugsweise zwischen 5 und 30 Minuten beträgt, und noch mehr zu bevorzugen zwischen 10 und 20 Minuten beträgt.

5. Verfahren nach einem der Ansprüche 1 bis 4, wobei der Testdruck (Ptest) zwischen 300 Millibar und 1 Bar beträgt, vorzugsweise zwischen 400 Millibar und 700 Millibar beträgt.

6. Verfahren nach einem der Ansprüche 1 bis 5, wobei der Testdruck (Ptest) unter Verwendung des Drucksensors (6; 16) und durch Annähern der zwei Platten, bis der Testdruck (Ptest) erreicht wird, erhalten wird.

7. Vorrichtung (7) zur Prüfung der Integrität eines zu prüfenden Beutels (3), der eine biopharmazeutische Flüssigkeit enthält, die mindestens einen Drucksensor (6; 16), eine Steuereinheit (5), zwei Platten (1, 2), die poröse vordere Oberflächen aufweisen, zwischen denen der zu prüfende Beutel (3) eingesetzt wird, wobei jede Platte eine Armierung (10, 20), eine poröse Vorderschicht (11, 21), die elektrisch leitfähig ist, und eine poröse Zwischenschicht (12, 22) aufweist, die zwischen der porösen Vorderschicht und der Armierung eingesetzt ist, wobei die Zwischenschicht nicht elektrisch leitfähig ist, wenn sie trocken ist, und mindestens einen Aktuator (4) umfasst, der dazu ausgestaltet ist, mindestens eine der Platten zu verlagern, wobei die Vorrichtung dazu ausgestaltet ist, das Verfahren nach Anspruch 1 durchzuführen.

8. Vorrichtung nach Anspruch 7, wobei die Platten auf einem Gleitschienensystem translatorisch gelagert sind.

9. Vorrichtung nach einem der Ansprüche 7 bis 8, wobei eine erste Platte (1) mit fester Position und eine zweite Platte (2) vorgesehen sind, die, vorzugsweise über der ersten Platte, beweglich gelagert ist.

10. Vorrichtung nach einem der Ansprüche 7 bis 8, wobei die poröse Zwischenschicht (12, 22) der Platten aus Vliessmaterial gebildet ist, das ausgewählt ist aus Polypropylenen oder Polyethylenen oder anderen ähnlichen Polymermaterialien.

11. Vorrichtung nach einem der Ansprüche 7 bis 9, wobei die poröse Zwischenschicht (12, 22) eine Dicke, die zwischen 1 mm und 3 mm beträgt, und Poren mit Abmessungen von zwischen 20 Mikron und 500 Mikron aufweist.

12. Vorrichtung nach einem der Ansprüche 7 bis 10, wobei die poröse Vorderschicht ein elektrisch leitfähiges Geflecht umfasst, das eine Elektrode bildet, die mit einem ersten Anschluss (C1) verbunden ist.

13. Vorrichtung nach einem der Ansprüche 7 bis 11, wobei die poröse vordere Schicht eine Dicke zwischen 1 mm und 3 mm aufweist und das leitfähige Geflecht eine Maschenweite von zwischen 20 Mikron und 50 Mikron oder von zwischen 50 Mikron und 150 Mikron oder von zwischen 150 Mikron und 500 Mikron aufweist.

14. Vorrichtung nach einem der Ansprüche 7 bis 12, wobei eine leitfähige Folie (17, 27) vorgesehen ist, die die Armierungselektrode bildet, der Armierung benachbart angeordnet ist und an einen zweiten Anschluss (C0) gekoppelt ist.

15. Vorrichtung nach einem der Ansprüche 7 bis 13, wobei der Aktuator (4) zur Druckbeaufschlagung der Platten als ein Druckluftzylinder oder als ein elektrischer Zylinder gebildet ist.

## Claims

1. A method for checking the integrity of a pouch (3) containing a biopharmaceutical fluid, using a device (7) comprising at least a pressure sensor (6; 16), a control unit (5), two plates (1, 2) having front surfaces between which the pouch to be checked (3) is interposed, and at least one actuator (4) configured to move at least one of the plates,
each plate having a framework (10, 20), an electrically conductive porous front layer (11, 21) and a porous intermediate layer (12, 22) interposed between the porous front layer and the framework, the intermediate layer being electrically non-conductive when it is dry,
the method comprising:
s1- applying, by bringing the two plates closer to each other thanks to said actuator (4), thus sandwiching the pouch to be checked, a predetermined test pressure (Ptest),
s2- then maintaining the position of the plates during the rest of the test,
c- applying an electric potential difference between a framework electrode (10, 20; 17; 27) and the porous front layer (11, 21),
d- measuring an electrical value representative of an electric current (i-leak) passing through the intermediate layer (12, 22), such a current being representative of the presence of a leakage liquid inside the intermediate layer,
e- deducing therefrom a fault state of the pouch if the electrical value representative of an electric current exceeds a predefined criterion (Ith).

2. The method according to claim 1, wherein steps c- and d- are carried out on the two plates (1, 2), and in step e-, a fault state of the pouch if the electrical value representative of d an electric current (i-leak) exceeds a predefined criterion on at least one of the plates.

3. The method according to any of claims 1 to 2, wherein the electric potential difference is formed in continuous mode or in pulsed mode from a stabilized voltage (VS), said electric value representative of an electric current (i-leak) passing through the intermediate layer is formed by the voltage (Vm) at the respective terminals (C0, C1) of the framework electrode and of the porous front layer.

4. The method according to any of claims 1 to 3, wherein the test pressure (Ptest) is maintained for a predefined period (TT), said predefined period (TT) being comprised between 3 minutes and 60 minutes, preferably between 5 and 30 minutes, and more preferably between 10 and 20 minutes.

5. The method according to any of claims 1 to 4, wherein the test pressure (Ptest) is comprised between 300 millibars and 1 bar, preferably between 400 millibars and 700 millibars.

6. The method according to any of claims 1 to 5, wherein the test pressure (Ptest) is obtained by using the pressure sensor (6; 16) and bringing the two plates together until the test pressure (Ptest) is reached.

7. A device (7) for checking the integrity of a pouch to be checked (3) containing a biopharmaceutical fluid, comprising at least one pressure sensor (6; 16), a control unit (5), two plates (1, 2) having porous front surfaces between which the pouch to be checked (3) is interposed, each plate having a framework (10, 20), an electrically conductive porous front layer (11, 21) and a porous intermediate layer (12, 22) interposed between the porous front layer and the reinforcement, the intermediate layer being electrically non-conductive when it is dry, and at least one actuator (4) configured to move at least one of the plates, the device being configured to implement the method according to claim 1.

8. The device according to claim 7, wherein the plates are mounted in translation on a slide system.

9. The device according to any of claims 7 to 8, wherein there is provided a first plate (1) in a fixed position, and a second plate (2) movably mounted, preferably above the first plate.

10. The device according to any of claims 7 to 8, wherein the porous intermediate layer (12, 22) of the plates is formed of non-woven material, selected among polypropylenes or polyethylenes, or other similar polymer materials.

11. The device according to any of claims 7 to 9, wherein the porous intermediate layer (12, 22) has a thickness comprised between 1mm and 3mm, and pores of dimensions comprised between 20 microns and 500 microns.

12. The device according to any of claims 7 to 10, wherein the porous front layer comprises an electrical conduction lattice forming an electrode connected to a first terminal (C1).

13. The device according to any of claims 7 to 11, wherein the porous front layer has a thickness comprised between 1mm and 3mm, and the conduction lattice has a mesh comprised between 20 microns and 50 microns, or between 50 microns and 150 microns, or between 150 microns and 500 microns.

14. The device according to any of claims 7 to 12, wherein there is provided a conductive sheet (17, 27) forming said framework electrode, arranged adjacent to the framework and coupled to a second terminal (C0).

15. The device according to any of claims 7 to 13, wherein the actuator (4) for pressurizing the plates is formed as a pneumatic cylinder or as an electric cylinder.
